# EUROPÄISCHE PATENTSCHRIFT

(11) **EP 2 952 487 B1**
(45) Veröffentlichungstag und Bekanntmachung des Hinweises auf die Patenterteilung: **26.08.2020**
(21) Anmeldenummer: 15169568.1
(22) Anmeldetag: 28.05.2015
(51) Int. Cl.: C03C 3/083, C03C 17/34, C03C 21/00

(54) **KRATZFESTES, CHEMISCH VORGESPANNTES GLASSUBSTRAT UND DESSEN VERWENDUNG**
SCRATCH RESISTANT, CHEMICALLY TEMPERED GLASS SUBSTRATE AND ITS USE
SUBSTRAT DE VERRE ANTI-RAYURES TREMPÉ CHIMIQUEMENT ET SON UTILISATION

(30) Priorität: 06.06.2014 DE 102014108057
(43) Veröffentlichungstag der Anmeldung: 09.12.2015
(73) Patentinhaber: Schott AG, 55122 Mainz (DE)
(72) Erfinder: Damm, Thorsten, 55268 Nieder-Olm (DE); Henn, Christian, 55546 Frei-Laubersheim (DE)
(74) Vertreter: Blumbach · Zinngrebe Patentanwälte PartG mbB

(56) Entgegenhaltungen:
- JP-A- 2004 271 480
- US-A- 5 776 603
- US-A1- 2009 197 048
- US-A1- 2010 027 383
- US-A1- 2010 196 685
- US-A1- 2012 212 826
- US-A1- 2013 127 202
- US-A1- 2014 106 172

## Beschreibung

Die Erfindung betrifft allgemein chemisch vorgespannte Gläser mit einem speziellen Schichtsystem.

Chemisch vorgespannte Gläser für mobile Elektronikgeräte, wie Smartphones, Tablet-PCs, Navigationssysteme etc., sind allgemein bekannt. Es handelt sich in der Regel um ein Alumosilikatglas, das einen Brechungsindex von größer 1,5 bei einer Wellenlänge von 550 nm aufweist. Durch das chemische Vorspannen, bei dem Natrium-Ionen des Glases gegen Kalium-Ionen aus einem Salzbad ausgetauscht werden, reichert sich das Kalium in der oberflächennahen Zone von mehreren Mikrometern an. Der Kaliumgehalt liegt dabei im Bereich bis zu wenigen Massenprozenten. Durch das chemische Vorspannen wird eine Erhöhung der Biegefestigkeit sowie der Kratzfestigkeit erzielt. Trotzdem ist nach relativ kurzer Gebrauchszeit eines typischen Produktes häufig eine Schädigung der Oberfläche in Form von Kratzern zu erkennen. Das chemische Vorspannen verhindert zwar das leichte Zerbrechen des Glases bei Biegebelastung, da die Druckvorspannung eine Ausbreitung des Risses, hervorgerufen beispielsweise durch einen Kratzer verhindert oder verzögert, eine Vermeidung von Kratzern ist jedoch meistens nicht gegeben.

Die Druckschrift US 2009/0197048 A1 betrifft einen Aluminosilikatglas-Artikel für die Verwendung einer Schutzabdeckung, insbesondere für mobile elektronische Geräte, umfassend ein Basisalkalialuminiumsilikatglas mit einer Oberflächendruckspannung von mindestens etwa 200 MPa, einer Oberflächendruckschicht-Tiefe im Bereich von 20-80 µm und mit einer amphiphobic Fluor basierenden Oberflächenschicht, die chemisch an die Oberfläche des Glasartikels gebunden ist.

Weiterhin sind zur Entspiegelung von Glasoberflächen Antireflexionsbeschichtungen bekannt, die je nach Ausführungsform aus mehreren Schichten bestehen, die einseitig oder beidseitig auf das Glassubstrat aufgebracht werden. Je nach Einsatzgebiet des Produktes ist eine mechanisch stabile, das heißt eine schädigungsresistente oder kratzfeste Ausführung des Antireflexionssystems wünschenswert oder notwendig. Das allgemeine Ziel einer optischen Antireflexionsbeschichtung ist es in erster Linie, die Reflexion des sichtbaren Teils des elektromagnetischen Spektrums gleichmäßig zu unterdrücken, so dass es möglichst zu keiner Farbauffälligkeit durch eine ungleichmäßige Restreflexion kommt.

Die Druckschrift US 2010/0027383 A1 offenbart ein transparentes Substrat mit einer vierlagigen Antireflexbeschichtung, die eine hohe Brechungsindex-Schicht aus Siliziumnitrid und eine niedrige Brechungsindex-Schicht aus Siliziumoxid umfasst, die abwechselnd auf wenigstens einem Teil einer Oberfläche des Substrats laminiert sind, wobei der Gehalt an Siliciumnitrid in dem Bereich bis zu einer Tiefe von 150 nm von der Außenfläche der Antireflexbeschichtung 30-50 Vol% beträgt.

Ein weiteres Beispiel für eine solche farbneutrale, kratzbeständige Antireflexionsbeschichtung ist in der US 2012/0212826 beschrieben. Allerdings lassen sich solche Antireflexionssysteme, bestehend aus vier Schichten, nicht ohne weiteres auf ein chemisch vorgespanntes Glas, wie es beispielsweise im Bereich der mobilen Elektronikgeräte verwendet wird, anwenden. Ursache ist die durch die chemische Vorspannung chemisch veränderte Oberfläche des Glases, die die Anbindung eines nitridischen Hartstoffmaterials der Antireflexionsbeschichtung reduziert und es zu Delaminationseffekten kommen kann. Die mechanische Beständigkeit von oben genannten Antireflexionssystemen ist weiterhin in vielen Fällen noch nicht ausreichend, um in der Applikation von mobilen Elektronikgeräten, wie beispielsweise Smartphones, angewendet zu werden.

Der Erfindung liegt daher die Aufgabe zugrunde, ein Schichtsystem für ein chemisch vorgespanntes Glassubstrat bereit zu stellen, das an dem Glassubstrat besonders gut haftet, es entspiegelt und eine besonders hohe Kratzfestigkeit aufweist. Vorzugsweise soll eine schichtinduzierte Verformung bzw. Verwölbung des Glases möglichst gering gehalten werden. Für eine weiter bevorzugte Ausgestaltung der Erfindung ist es ferner Aufgabe, ein Schichtsystem für ein chemisch vorgespanntes Glassubstrat anzugeben, das Fingerabdruckauffälligkeiten reduziert oder das zumindest leicht zu reinigen ist.

Diese Aufgabe wird durch den Gegenstand der unabhängigen Ansprüche gelöst. Vorteilhafte Ausgestaltungen und Weiterbildungen der Erfindung sind in den jeweiligen abhängigen Ansprüchen angegeben.

Demgemäß sieht die Erfindung ein kratzfestes, chemisch vorgespanntes Glaselement mit kaliumreicher Oberfläche vor, das ein Schichtsystem aus mehreren aufeinanderfolgenden Schichten umfasst, welches angrenzend an die kaliumreiche Oberfläche des Glases eine sauerstoffreiche Schicht aufweist, die vorwiegend Siliziumoxid und/oder Aluminiumoxid umfasst, wobei die sauerstoffreiche Schicht eine Haftvermittlerschicht zu einer nitridischen Hartstoffschicht ist, die unterster Teil einer mehrlagigen, insbesondere vierlagigen, Antireflexionsbeschichtung ist. Die Antireflexionsbeschichtung ist dabei aus Schichten mit verschiedenen, abwechselnd höheren und niedrigeren Brechungsindizes aufgebaut, wobei die Schichten mit höheren Brechungsindizes eine untere nitridische Hartstoffschicht und eine obere nitridische Hartstoffschicht sind. Die Schichten mit niedrigerem Brechungsindex sind vorzugsweise aus Siliziumoxid mit einem Anteil von Aluminium aufgebaut.

Die gute Anbindung der untersten und unteren nitridischen Hartstoffschicht an das chemisch vorgespannte Glassubstrat mit kaliumreicher Oberfläche wird über die Verwendung eines Haftvermittlers erzielt, der idealerweise einen dem Glassubstrat ähnlichen Brechungsindex aufweist, vorzugsweise ähnlich im sichtbaren Spektralbereich oder vorteilhafterweise bei einer Wellenlänge von circa 550 nm, insbesondere mit einer Abweichung von weniger als 10%. Vorzugsweise ist die Schichtdicke der Haftvermittlerschicht derart gestaltet, dass sie optisch unauffällig ist. Das heißt, die mittlere Reflektivität im Wellenlängenbereich von 380 nm bis 780 nm verändert sich bevorzugt um weniger als 0,5%, besonders bevorzugt um weniger als 0,2%.

Es hat sich gezeigt, dass eine dünne Haftvermittlerschicht, die hauptsächlich aus Siliziumoxid (SiO₂) besteht, die aber auch Anteile von Aluminiumoxid beinhalten oder zum Großteil aus Aluminiumoxid bestehen kann, als ein solcher Haftvermittler besonders geeignet ist. Vorzugsweise weist die sauerstoffreiche Schicht eine Schichtdicke von 1 nm bis 100 nm auf, bevorzugt von 1 nm bis 50 nm und besonders bevorzugt von 1 nm bis 20 nm.

Scheinbar stellt diese dünne sauerstoffreiche Schicht im Gegensatz zur nitridischen Schicht ihrerseits eine starke chemische Anbindung an die kaliumreiche Oberfläche des chemisch vorgespannten Glassubstrats her, so dass eine Delamination nicht stattfindet bzw. unterbunden wird.

Diese dünne Haftvermittlerschicht weist bevorzugt eine geringere Schichtdicke auf als jede andere einzelne Schicht der Antireflexionsbeschichtung.

In bevorzugter Ausgestaltung der Antireflexionsbeschichtung weist die obere nitridische Hartstoffschicht die größte Schichtdicke der Antireflexionsbeschichtung und des gesamten Schichtsystems auf mit einer dünneren Schichtdicke der oberen nitridischen Hartstoffschicht im Bereich von 100 nm bis 200 nm, bevorzugt von 130 nm bis 170 nm, wodurch die Antireflexionsbeschichtung farblich neutral reflektierend gestaltet werden kann, oder alternativ mit einer mittleren Schichtdicke der oberen nitridischen Hartstoffschicht von 200 nm bis 300 nm, bevorzugt von 230 nm bis 290 nm, wodurch die Antireflexionsbeschichtung nahezu farblich neutral reflektierend gestaltet werden kann und eine verbesserte Kratzbeständigkeit gegenüber der erstgenannten Beschichtung aufweist. In weiterer alternativer bevorzugter Ausgestaltung der Antireflexionsbeschichtung weist die obere nitridische Hartstoffschicht eine dickere Schichtdicke der oberen nitridischen Hartstoffschicht im Bereich von 300 nm bis 1000 nm, bevorzugt im Bereich von 350 nm bis 600 nm, ganz besonders bevorzugt von 400 nm bis 500 nm auf, die eine Antireflexionsbeschichtung mit ausreichend guter antireflektierender Wirkung bei erhöhter Kratzbeständigkeit bewirkt.

Durch die besondere Form beziehungsweise den Aufbau der Antireflexionsbeschichtungen mit einer mitteldicken Schichtdicke der oberen nitridischen Hartstoffschicht oder einer deutlich dickeren Hartstoffschicht als typischerweise in einem farbneutralen Antireflexionssystem verwendet wird, wird eine erhöhte Kratzfestigkeit erzielt.

Die obere nitridische Hartstoffschicht weist vorzugsweise einen Anteil an der gesamten Schichtdicke des Schichtsystems von mindestens 0,4 auf, bevorzugt von mindestens 0,6, besonders bevorzugt von mindestens 0,7.

Vorzugsweise umfasst das Schichtsystem angrenzend an die oberste Schicht der Antireflexionsbeschichtung noch eine fluororganische Schicht. Insbesondere kann die Schicht eine Monolage fluororganischer Moleküle sein, bevorzugt mit einer Schichtdicke von 1 nm bis 20 nm, besonders bevorzugt mit einer Schichtdicke von 1 nm bis 10 nm. Bei der fluororganischen Schicht kann es sich beispielsweise um eine harte, anti-reflektierend wirkende und oleophobe Beschichtung von einem beliebigen Hersteller handeln. Zudem sind alle aus dem Stand der Technik bekannten Beschichtungsverfahren, wie zum Beispiel spin coating, spray coating oder evaporation coating, zum Aufbringen derartiger fluororganischer Schichten in separaten Beschichtungsanlagen oder auch innerhalb einer Sputteranlage oder Aufdampfanlage auf die vorgenannten Schichtsysteme möglich.

Überraschenderweise hat sich gezeigt, dass ein Schichtsystem, bei dem auf eine Antireflexionsbeschichtung mit einer dicken, oberen nitridischen Hartstoffschicht, insbesondere mit der größten Schichtdicke der Antireflexionsbeschichtung, noch eine zusätzliche fluororganische Schicht hinzugefügt ist, nicht nur wirksam ist, Fingerabdruckauffälligkeiten zu reduzieren oder sich leicht reinigen zu lassen, sondern dass das derart beschichtete, chemisch vorgespannte Glassubstrat und damit das erfindungsgemäße Glaselement insbesondere die Vermeidung von Kratzern unterstützt.

Dies wird darauf zurückgeführt, dass die zusätzliche fluororganische Schicht vermutlich den Reibwert der Oberfläche so reduziert, dass eine Schädigung der Oberfläche geringer ausfällt, da ein auf die Oberfläche treffender Gegenstand somit leicht abgleiten kann.

Bevorzugt sind die nitridischen Hartstoffschichten mit höheren Brechungsindizes aus Siliziumnitrid mit einem Anteil von Aluminium aufgebaut, bei welchen das Verhältnis der Stoffmengen von Aluminium zu Silizium bevorzugt größer als 0,05, vorzugsweise größer als 0,08, beträgt.

Es wurde herausgefunden, dass Siliziumnitrid-basierte Schichtsysteme mit zunehmender Schichtdicke eine deutlich reduzierte schichtinduzierte Verwölbung bzw. Verformung gegenüber Aluminiumnitrid-basierten Systemen aufweisen. Folglich ist hier ein Siliziumnitrid-basiertes Schichtsystem gegenüber einem Aluminiumnitrid-basierten System bevorzugt, insbesondere für Gläser, bei denen eine möglichst geringe Verwölbung wichtig ist.

Ein hier eingesetztes Glassubstrat ist durch den Austausch von Natrium- oder Lithium- gegen Kalium-Ionen an dessen Oberfläche chemisch vorgespannt, wobei vorzugsweise die Druckspannung in der Oberfläche des Glases mindestens 700 MPa und die Austauschtiefe der Alkaliionen mindestens 25 µm beträgt. Besonders bevorzugt beträgt die Druckspannung in der Oberfläche des Glases mindestens 750 MPa und die Austauschtiefe der Alkaliionen mindestens 30 µm. Ganz besonders bevorzugt beträgt die Druckspannung in der Oberfläche des Glases mehr als 800 MPa und die Austauschtiefe der Alkaliionen mindestens 35 µm.

In bevorzugter Ausführung weist die Zusammensetzung des chemisch vorgespannten Glases im Inneren des Glassubstrats folgende Komponenten in Molprozent auf:

| | |
|---|---|
| SiO₂ | 56 - 70 |
| Al₂O₃ | 10,5 - 16 |
| B₂O₃ | 0 - 3 |
| P₂O₅ | 0 - 3 |
| Na₂O | 10 - 15 |
| K₂O | 0 - 2 |
| MgO | 0 - 5 |
| ZnO | 0 - 3 |
| TiO₂ | 0 - 2,1 |
| SnO₂ | 0 - 1 |
| F | 0- 5, und |
| 0 - 2, vorzugsweise 0 - 1, weitere Komponenten. | |

Das eingesetzte Glassubstrat hat je nach Einsatzgebiet vorzugsweise eine Dicke von 0,25 mm bis 2,0 mm.

Zur Herstellung des erfindungsgemäßen kratzfesten, chemisch vorgespannten Glaselements können die Schichten des Schichtsystems durch Sputtern, insbesondere reaktives Sputtern, abgeschieden werden.

Das erfindungsgemäße kratzfeste, chemisch vorgespannte Glaselement kann als Deckglas für optische Anzeigen elektronischer Geräte mit oder ohne Touch-Funktion, insbesondere mobiler Geräte, wie Mobiltelefone, Smartphones, Tablet-PCs oder PCs mit Touch-Display, Monitore, Fernsehgeräte, Navigationsgeräte, öffentliche Displays und Terminals und/oder industrielle Displays eingesetzt werden.

Die Erfindung wird nachfolgend anhand von Ausführungsbeispielen und unter Bezugnahme auf die beigeschlossenen Zeichnungen näher erläutert. In den Zeichnungen bezeichnen gleiche Bezugszeichen gleiche oder entsprechende Elemente. Es zeigen:
Fig. 1 ein Ausführungsbeispiel eines kratzfesten, chemisch vorgespannten Glaselements mit einem Schichtsystem, umfassend eine Haftvermittlerschicht, eine vierlagige Antireflexionsbeschichtung und eine fluororganische Schicht in schematischer Darstellung,
Fig. 2 die schichtinduzierte Verformung (Verwölbung eines 0,7 mm dicken Glases über 150 mm (6 Zoll) in Mikrometern (µm) von chemisch vorgespannten Glaselementen mit Aluminiumnitrid-basierten Schichtsystemen und mit Siliziumnitrid-basierten Schichtsystemen gegenüber der Schichtdicke in Nanometern (nm),
Fig. 3 Balkendiagramme der Schichtdicke in Nanometern (nm) dreier verschieden dick beschichteter, chemisch vorgespannter Glassubstrate mit einem Schichtsystem, umfassend eine Haftvermittlerschicht und eine vierlagige Antireflexionsbeschichtung mit unterschiedlich dicker, oberer nitridischer Hartstoffschicht,
Fig. 4 Reflektivitäten in Prozent eines unbeschichteten, chemisch vorgespannten Glassubstrats und dreier unterschiedlich dick beschichteter, chemisch vorgespannter Glassubstrate nach Fig. 3 als Funktion der Wellenlänge in Nanometern (nm) und
Fig. 5 Balkendiagramme der Zunahme des Haze-Wertes nach einem Schleifpapiertest für ein unbeschichtetes, chemisch vorgespanntes Glassubstrat und für vier verschieden beschichtete, chemisch vorgespannte Glassubstrate.

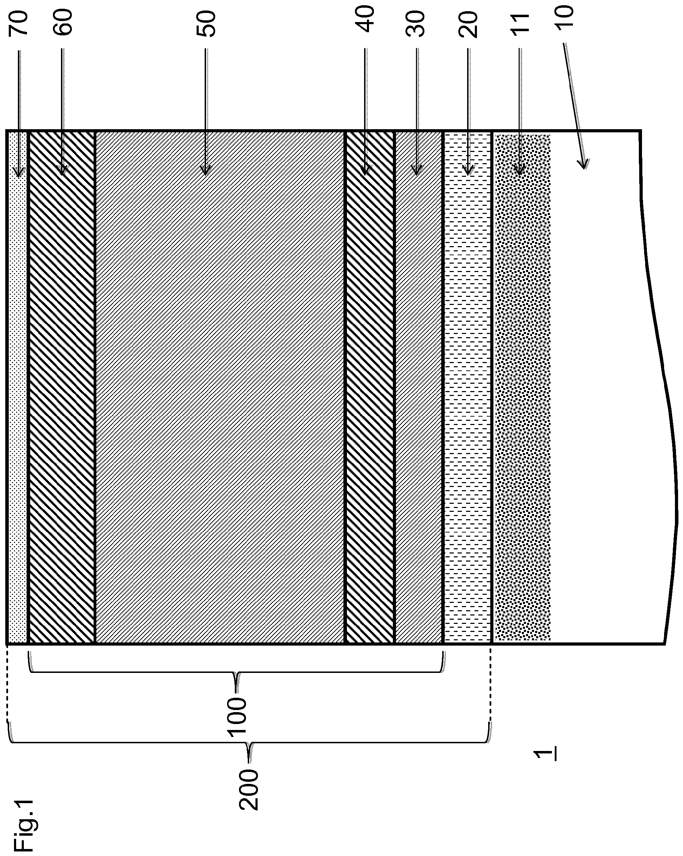

Das in Fig. 1 gezeigte Beispiel eines Glaselements 1 in Form eines chemisch vorgespannten, mit einer Beschichtung versehenen Glassubstrats 10 mit kaliumreicher Oberfläche 11 und ein darauf aufeinander gestapeltes Schichtsystem 200. Das Schichtsystem 200 basiert auf einer Haftvermittlerschicht 20, einer mehrlagigen, bevorzugt vierlagigen, Antireflexionsbeschichtung 100 und einer optionalen fluororganischen Schicht 70.

Für das Glassubstrat 10 kann beispielsweise ein fluorhaltiges Glas mit der oben angegebenen Zusammensetzung mit einem SiO₂-Gehalt im Bereich von 56 bis 70 Molprozent verwendet werden.

Typischerweise ist das Glassubstrat 10, 11 scheiben- oder plattenförmig, wobei die Haftvermittlerschicht 20 eine dünne sauerstoffreiche Schicht ist, die hauptsächlich Siliziumoxid aufweist, die aber auch Anteile von Aluminiumoxid beinhaltet oder zum Großteil aus Aluminiumoxid bestehen kann. Diese unterste sauerstoffreiche Schicht 20 haftet besonders gut an der kaliumreichen Oberfläche 11 des Glassubstrats 10 und bildet einen Haftvermittler zu der untersten Schicht der Antireflexionsbeschichtung 100, nämlich einer nitridischen Hartstoffschicht 30.

Um einerseits eine gute Kratzschutz-Wirkung und andererseits eine gute Entspiegelung zu erzielen, ist es günstig, wenn die Antireflexionsbeschichtung zumindest zwei Lagen mit höherem Brechungsindex und zumindest zwei Lagen mit niedrigerem Brechungsindex aufweist.

In der Antireflexionsbeschichtung 100 wechseln sich daher Schichten mit höherem Brechungsindex und Schichten mit niedrigerem Brechungsindex ab. Dabei enthalten die Hartstoffschichten mit höherem Brechungsindex 30, 50 ein Nitrid und die Schichten mit niedrigerem Brechungsindex 40, 60 bevorzugt ein Siliziumoxid mit einem Anteil von Aluminium, so dass das Verhältnis der Stoffmengen von Aluminium zu Silizium bevorzugt größer als 0,05, vorzugsweise größer als 0,08 beträgt, die Stoffmenge von Silizium aber gegenüber der Stoffmenge von Aluminium überwiegt. Vorzugsweise beträgt das Verhältnis der Stoffmengen von Aluminium zu Silizium etwa 0,075 bis 0,125, besonders bevorzugt etwa 0,1. Die Schichten 40, 60, die vorwiegend Siliziumoxid enthalten, wirken daher niedrigbrechend. Die Schichten 30, 50 sind demgegenüber Lagen mit höherem Brechungsindex und bestehen bevorzugt aus Siliziumnitrid, ebenfalls mit einem Anteil von Aluminium. Vorzugsweise ist das Verhältnis der Stoffmengen von Aluminium und Silizium in allen Lagen im Wesentlichen gleich.

Um eine möglichst hohe mechanische Beständigkeit zu erlangen, wird als unterste Schicht 30 der Antireflexionsbeschichtung 100 die mechanisch beständigere Komponente, also Siliziumnitrid, beziehungsweise aluminiumdotiertes Siliziumnitrid als dünne Schicht eingesetzt, da diese das Wachstum des übrigen Wechselschichtsystems bestimmt. Anschließend folgt eine dünne aluminiumdotierte SiO₂ Schicht 40, gefolgt von einer besonders dicken aluminiumdotierten Si₃N₄ Hartstoffschicht 50, welche die Resistenz nach außen bewirkt. Eine anschließende dünnere aluminiumdotierte SiO₂ Schicht 60 wird so abgeschieden, dass die gewünschte Entspiegelung möglich ist und gleichzeitig bei einer möglichen Entfernung dieser Schicht 60 das übrige System optisch nicht auffälliger erscheint.

In bevorzugter Ausgestaltung der Antireflexionsbeschichtung 100 weist die obere nitridische Hartstoffschicht 50 die größte Schichtdicke der Antireflexionsbeschichtung 100 und des gesamten Schichtsystems 200 auf mit einer Schichtdicke im Bereich von 200 nm bis 1000 nm, bevorzugt von 300 nm bis 600 nm, ganz besonders bevorzugt von 400 nm bis 500 nm.

Die obere nitridische Hartstoffschicht 50 weist vorzugsweise einen Anteil an der gesamten Schichtdicke des Schichtsystems 200 von mindestens 0,4 auf, bevorzugt von mindestens 0,6, besonders bevorzugt von mindestens 0,7.

Durch die besondere Form bzw. den Aufbau der Antireflexionsbeschichtung 100 mit einer deutlich dickeren Hartstoffschicht 50 als typischerweise in einem farbneutralen Antireflexionssystem verwendet wird, wird eine erhöhte Kratzfestigkeit erzielt.

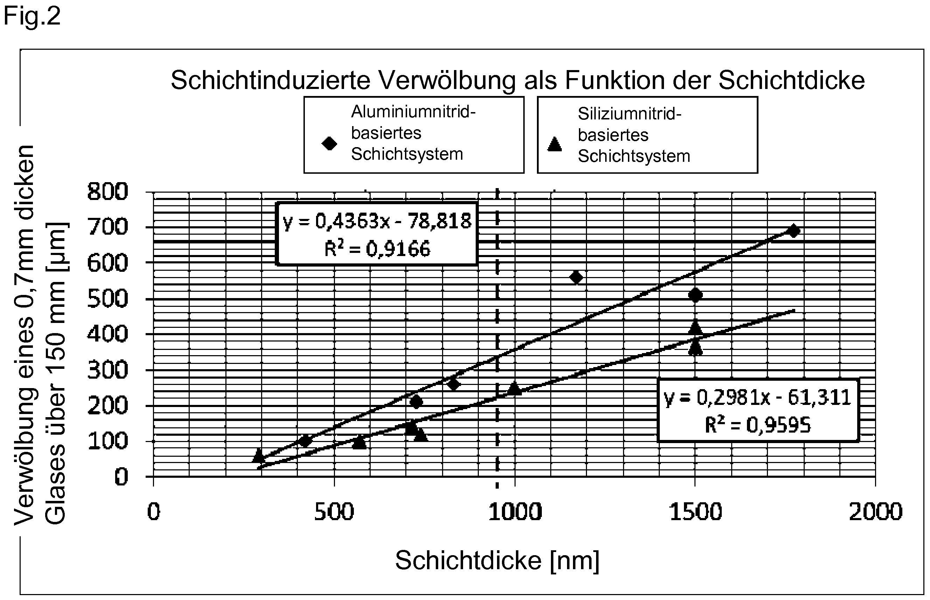

Fig. 2 zeigt die schichtinduzierte Verformung bzw. Verwölbung in Mikrometern von chemisch vorgespannten Glassubstraten mit Aluminiumnitrid-basierten Schichtsystemen, insbesondere für harte Antireflexionssysteme, und von Siliziumnitrid-basierten Schichtsystemen, insbesondere für kratzresistente Antireflexionsbeschichtungen, gegenüber der Schichtdicke in nm.

Aus Fig. 2 ist ersichtlich, dass mit zunehmender Schichtdicke Siliziumnitrid-basierte Schichtsysteme eine deutlich reduzierte schichtinduzierte Verwölbung gegenüber Aluminiumnitrid-basierten Systemen aufweisen. Folglich sind hier Siliziumnitrid-basierte Schichtsysteme gegenüber Aluminiumnitrid-basierten Systemen bevorzugt, insbesondere für Gläser, bei denen eine möglichst geringe Verwölbung wichtig ist.

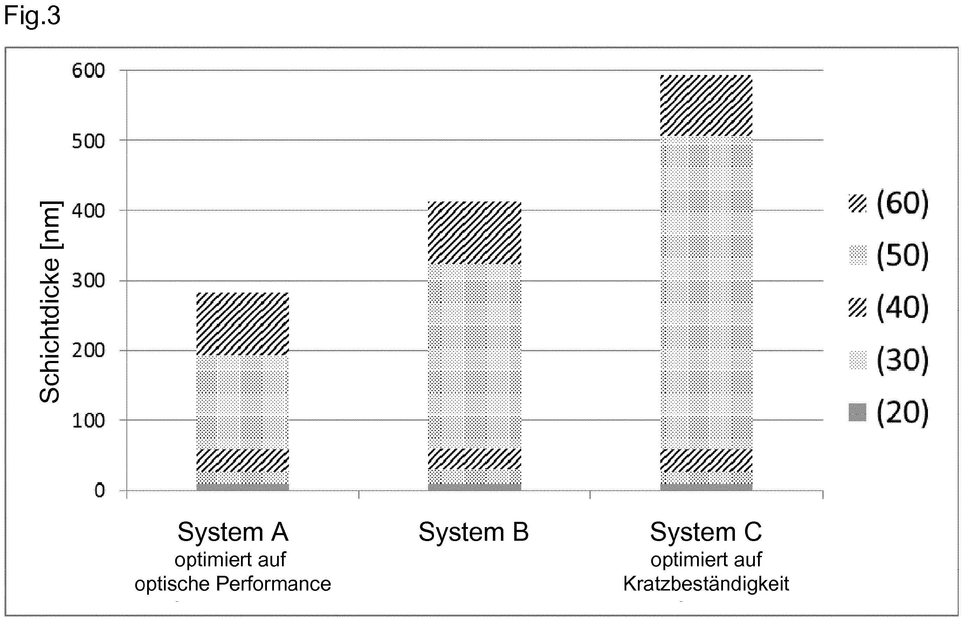

Fig. 3 zeigt beispielhaft an System A, System B und System C drei verschieden dick beschichtete, chemisch vorgespannte Glassubstrate im Vergleich. System A stellt ein chemisch vorgespanntes Glassubstrat mit einem Schichtsystem 200 dar, das eine Haftvermittlerschicht 20 und eine vierlagige Antireflexionsbeschichtung 100 mit den Schichten 30, 40, 50 und 60 umfasst, wobei die obere nitridische Hartstoffschicht 50 weniger als ein Drittel so dick ist wie die des besonders harten und im Wesentlichen gleich aufgebauten Systems C. Bei System B ist die

Hartstoffschicht 50 weniger als zwei Drittel so dick wie die des im Wesentlichen gleich aufgebauten Systems C.

Bei den in Fig. 3 gezeigten, speziellen Beispielen der Systeme A, B und C beträgt die Schichtdicke der untersten Schicht, der Haftvermittlerschicht 20, jeweils 10 nm, die Schichtdicke der darauffolgenden Siliziumnitrid-haltigen höherbrechenden Schicht 30 jeweils zwischen 10 und 20 nm, die Schichtdicke der weiteren Schicht 40 jeweils zwischen 30 und 40 nm, die Schichtdicke der oberen Siliziumnitrid-haltigen höherbrechenden Schicht 50 für System A) 130 bis 140 nm, für System B) 260 bis 270 nm und für System C) 420 bis 450 nm, während die Schichtdicke der obersten Schicht 60 der Antireflexionsbeschichtung 100 bei den drei Systemen A, B und C in etwa 90 nm beträgt.

Ohne Beschränkung auf das dargestellte Beispiel werden folgende Schichtdickenbereiche bevorzugt:
Vorzugsweise weist die Antireflexionsbeschichtung 100 eine Schichtdicke im Bereich von insgesamt 200 nm bis 700 nm auf.

Gemäß einer besonders bevorzugten Ausführungsform, auf welcher auch die Ausführungsbeispiele der Fig. 3 beruhen, ist eine Antireflexionsbeschichtung 100 mit einem Schichtstapel aus vier aufeinanderfolgenden Lagen, beziehungsweise 30, 40, 50, 60 vorgesehen, bei welcher die unterste Lage 30 eine siliziumnitrid-haltige höherbrechende Lage ist, wobei die weitere siliziumnitrid-haltige höherbrechende Lage 50, welche die oberste hochbrechende Lage des Schichtstapels bildet, die größte Schichtdicke innerhalb des Schichtstapels aufweist, und wobei die oberste Lage 60 des Schichtstapels eine Lage mit niedrigerem Brechungsindex aus Siliziumoxid, vorzugsweise mit einem Anteil von Aluminium bildet und die zweitgrößte Schichtdicke unter den Lagen des Schichtstapels aufweist. Gemäß noch einer Ausführungsform, welche ebenfalls bei den in Fig. 3 dargestellten Beschichtungen realisiert ist, gilt, dass die untere nitridische Hartstoffschicht 30 und die darauf aufliegende Schicht 40 mit niedrigerem Brechungsindex gemeinsam eine geringere Schichtdicke aufweisen als die oberste Schicht 60 der Antireflexionsbeschichtung 100, wobei die oberste Schicht 60 vorzugsweise die zweitgrößte Schichtdicke der Antireflexionsbeschichtung 100 aufweist. Mit einer solchen Schichtabfolge wird eine hohe Kratzbeständigkeit bei gleichzeitig guter Entspiegelungswirkung erzielt.

Insbesondere bei dem in Fig. 3 rechts gezeigten Beispiel des Systems C ist die Schichtdicke der obersten hochbrechenden Lage sehr groß. Das gezeigte Beispiel ist auf eine sehr hohe Kratzbeständigkeit optimiert. Ohne Beschränkung auf das spezielle dargestellte Beispiel kann zur Erzielung einer hohen Kratzbeständigkeit vorgesehen sein, dass die Schichtdicke der oberen hochbrechenden, nitridischen Schicht 50 der Antireflexionsbeschichtung größer ist, als die Summe der Schichtdicken der übrigen Schichten 30, 40, 60 der Antireflexionsbeschichtung 100.

Das System C mit einer besonders großen Schichtdicke der oberen nitridischen Hartstoffschicht 50 ist somit auf die Kratzbeständigkeit hin optimiert.

Demgegenüber weist das System B ein Schichtsystem auf, das einen Kompromiss zwischen sehr guter Kratzbeständigkeit und sehr guter optischer Performance darstellt. Es war sehr überraschend, dass Experimente zeigten, dass zwischen den beiden Systemen A und C noch ein System B gefunden wurde, dass bei einer Änderung von im Wesentlichen nur der Schichtdicke der oberen hochbrechenden Schicht 50 den optischen und mechanischen Anforderungen entsprach. Das Überraschendste war, dass dieses System B einen hervorragenden Kompromiss zwischen dem eine hohe Kratzfestigkeit aufweisenden System C und dem eine sehr gute optische Performance aufweisenden System A darstellt. System B entspiegelt dabei noch etwas besser als das System A, jedoch ist die Breite der Entspiegelung bezogen auf den Wellenlängenbereich geringer.

Gegenüber System C und System B weist das System A ein Schichtsystem mit dem Schwerpunkt auf die optische Performance auf.

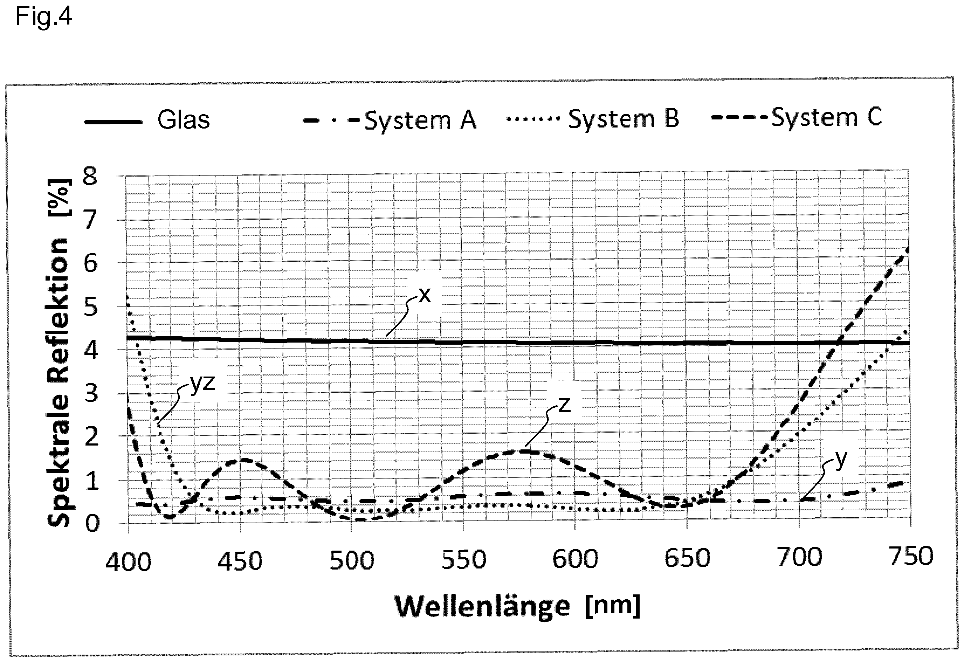

Dies wird auch deutlich aus den ermittelten spektralen Reflexionskurven, die in Fig. 4 dargestellt sind. Die durchgehende Kurve X bezeichnet die spektrale Reflektivität bzw. den Reflexionsgrad eines unbeschichteten, chemisch vorgespannten Glases, die typischerweise bei 4% liegt. Die strichpunktartige Kurve Y stellt die spektrale Reflektivität beziehungsweise den Reflexionsgrad eines chemisch vorgespannten Glases, welches mit dem Schichtsystem bzw. der Antireflexionsbeschichtung nach System A (nach Fig. 3) beschichtet ist, dar. Die gestrichelt dargestellte Kurve Z zeigt die spektrale Reflektivität beziehungsweise den Reflexionsgrad eines chemisch vorgespannten Glassubstrats mit dem Schichtsystem bzw. mit der Antireflexionsbeschichtung, also einem Glaselement nach System C (nach Fig. 3). Überraschender Weise ist die Entspiegelungseigenschaften des Systems C nur geringfügig schlechter, als bei dem auf niedrige Reflektivität optimierten System A.
Die gepunktete Kurve yz stellt die spektrale Reflektivität eines chemisch vorgespannten Glases, welches mit dem Schichtsystem bzw. der Antireflexionsbeschichtung nach System B (nach Fig. 3) beschichtet ist, dar. Überraschender Weise sind die Entspiegelungseigenschaften des Systems B besser hinsichtlich der Tiefe der Entspiegelung als bei dem auf niedrige Reflektivität optimierten System A.

Wie anhand von Fig. 4 belegt wird, lassen sich mit einem erfindungsgemäßen Schichtsystem Entspiegelungen mit einer Reduzierung der Reflektivität von mehr als 3% mit neutralem Farbeindruck erzielen. Die mittlere Reflektivität liegt im sichtbaren Spektralbereich von bevorzugt 400 nm bis 700 nm bei weitgehend unter 2% oder sogar bei weitgehend unter 1%.

Die Wirkung der mechanischen Beständigkeit bzw. die Wirksamkeit hinsichtlich der Kratzanfälligkeit der erfindungsgemäß beschichteten und somit kratzfesten, chemisch vorgespannten Glaselemente wird mit einem Sandbeziehungsweise Schleifpapiertest untersucht. Dabei wird die Wirkung von Sandkörnern und /oder Korundpartikeln auf die Glaselemente simuliert.

Es wurden Messungen der Zunahme des Haze-Wertes infolge des Schleifpapiertests an den gleichen Substraten durchgeführt, die auch den in Fig. 3 und Fig. 4 zugrunde lagen, und weiterhin an einem Substrat nach dem System C mit einer zusätzlichen fluororganischen Schicht 70 (s. Fig. 1).

Die Haze-Messung erfolgt gemäß dem Standard ASTM D1003-95. Dabei wird bei dem durch das Glaselement transmittierten Licht der Anteil von Streulicht mit der Intensität des gesamten transmittierten Lichts verglichen.

Die Streustrahlung ist dabei ein Maß für den Anteil der durch Kratzer geschädigten Fläche. Ein Defekt in der Oberfläche des Glases führt zu einer Ablenkung des senkrecht zur Glasoberfläche einfallenden Strahls. Je mehr Schädigungen auf der Oberfläche sind, desto mehr Strahlung wird vom Detektor ferngehalten. Somit ist der Haze-Wert, angegeben in Prozent, ein Maß für den Schädigungsgrad der Oberfläche. Bei einem unbeschädigten beschichteten oder unbeschichteten Glas liegt der Haze-Wert bei etwa 0,1.

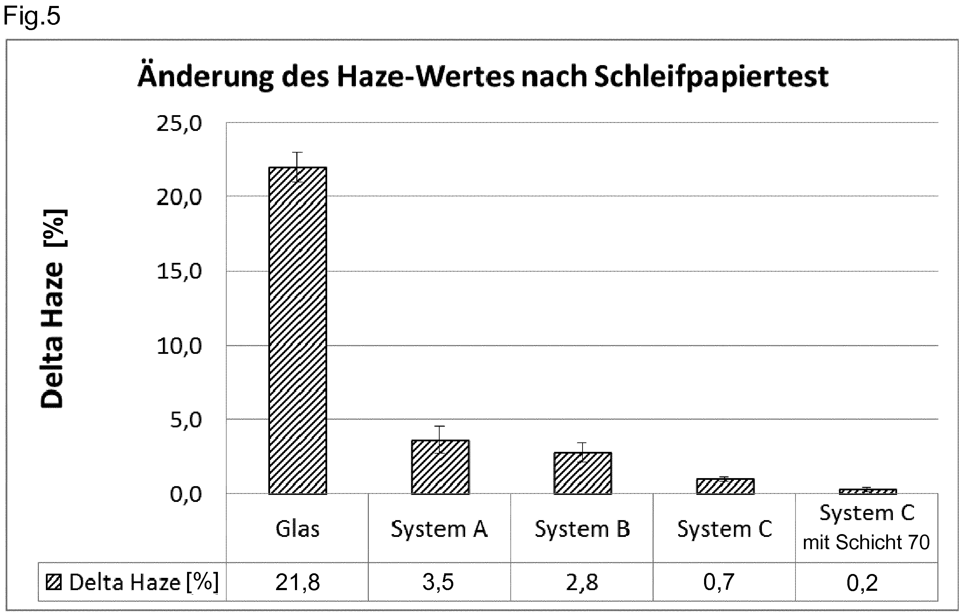

Die Ergebnisse der Haze-Messungen sind in Fig. 5 als Balkendiagramme dargestellt. Die Messwerte in Fig. 5 geben somit die prozentuale Zunahme des Streulichtanteils aufgrund von Kratzern und anderen Beschädigungen der Substratoberfläche nach dem Schleifpapiertest wieder.

Die Änderung des Haze-Wertes nach dem Schleifpapiertest zeigt in Fig. 5, dass die Beschichtung des Glassubstrats 10, 11 mit dem Schichtsystem 200 entsprechend System C (aus Fig. 3), das mit einer besonders großen Schichtdicke der oberen nitridischen Hartstoffschicht 50 der Antireflexionsbeschichtung 100 auf die Kratzbeständigkeit hin optimiert ist, eine überraschend deutliche Verbesserung gegenüber dem unbeschichteten Glassubstrat und auch gegenüber dem Schichtsystem 200 des Systems A (nach Fig. 3), dessen obere nitridische Schicht 50 der Antireflexionsbeschichtung 100 weniger als ein Drittel so dick ist wie die des Systems C. Das Schichtsystem 200 des Systems C zeigt eine Reduzierung der Änderung des Haze-Wertes nach einem Schleifpapiertest um circa 1/30 gegenüber dem unbeschichteten, chemisch vorgespannten Glassubstrat. Der Haze-Wert des Systems B mit einer in etwa doppelt so dicken nitridischen Hartstoffschicht 50 im Vergleich zu System A liegt bei etwa 75% des Systems A.

Überraschenderweise zeigt sich weiterhin, dass ein Schichtsystem 200, bei dem zu dem System C auf die Antireflexionsbeschichtung 100 noch eine zusätzliche fluororganischen Schicht 70 hinzugefügt ist, wie in Fig. 1 gezeigt, nicht nur wirksam ist, Fingerabdrücke nicht entstehen zu lassen oder sich leicht reinigen zu lassen, sondern dass das derart beschichtete, chemisch vorgespannte Glassubstrat insbesondere die Vermeidung von Kratzern unterstützt. Wie aus der Fig. 5 ersichtlich ist, wird der gemessene Haze-Wert des Systems C nochmals um mehr als den Faktor drei reduziert. Das Schichtsystem 200 des Systems C mit der fluororganischen Schicht 70 zeigt eine Reduzierung der Änderung des Haze-Wertes nach einem Schleifpapiertest um circa 1/100 gegenüber dem unbeschichteten, chemisch vorgespannten Glassubstrat.

Dies wird darauf zurückgeführt, dass die zusätzliche fluororganischen Schicht 70 vermutlich den Reibwert der Oberfläche so reduziert, dass ein Verzahnen und Verkanten der Abrasivmaterialien des Schleifpapiers in stark reduziertem Maße stattfindet und eine Schädigung der Oberfläche daher geringer ausfällt.

Als bevorzugte Abscheidemethode für die Herstellung des Schichtaufbaus der Antireflexionsbeschichtung beziehungsweise des Schichtsystems für das chemisch vorgespannte Glassubstrat wird Sputtern, insbesondere Magnetronsputtern, und ganz besonders das Mittelfrequenz-Magnetronsputtern verwendet. Dieses ist insbesondere als reaktives Sputtern vorteilhaft, da in diesem Fall sowohl das Siliziumoxid der niedrigbrechenden Schichten, als auch das bevorzugt verwendete Siliziumnitrid für die hochbrechenden Schichten mit dem gleichen Target hergestellt werden können. Die Umschaltung auf die verschiedenen Schichtmaterialien kann einfach durch Änderung der Prozessparameter, insbesondere der Zusammensetzung des Prozessgases erfolgen.

Es zeigt sich, dass die mit diesem Verfahren hergestellten Schichten nicht nur sehr dicht werden, sondern vor allem auch eine extrem glatte Oberfläche aufweisen. Gerade dies scheint die mechanische Beständigkeit gegen Verkratzen oder Abrasion besonders zu erhöhen, da die Schichtoberfläche kaum Angriffspunkte bietet, beziehungsweise sich Beschädigungen nicht ausgehend von Unregelmäßigkeiten der Beschichtung ausgehend ausbreiten können.

Es können mit diesem Verfahren Schichten, beziehungsweise Schichtoberflächen erzeugt werden, welche einen Wert der quadratischen Rauheit (auch als RMS-Wert bezeichnet) von weniger als 1,5 Nanometern, sogar von weniger als 1 Nanometer, bezogen auf eine Fläche von 1 Quadratmikrometer aufweisen. Die gleichen Werte gelten auch für die mittlere Rauheit (Ra). Tendenziell ist die mittlere Rauheit sogar noch etwas niedriger als die quadratische Rauheit.

Die Schichteigenschaften können weiterhin sehr vorteilhaft durch ein besonderes Sputterverfahren günstig beeinflusst werden. Dieses Verfahren wird als HiPIMS Verfahren (High Power Impulse Magnetron Sputtering) oder auch HPPMS-Verfahren (High Power Pulse Magnetron Sputtering) bezeichnet. Dieses Abscheideverfahren stellt ein gepulstes Sputterverfahren dar, bei dem hochenergetische Pulse erzeugt werden, die zu hohen Leistungsdichten auf dem Target deutlich über die für das Sputtern typischen 10W/cm² führen.

Die vorstehend erläuterten, erfindungsgemäßen Glaselemente in Form beschichteter, chemisch vorgespannter Glassubstrate, wie sie beispielhaft in Fig. 1 und/oder in Fig. 3 gezeigt sind, eignen sich besonders gut Deckglas für optische Anzeigen elektronischer Geräte, insbesondere mit oder ohne Touch-Funktion, insbesondere Mobiltelefone, Smartphones, Tablet-PCs oder PCs mit Touch-Display, Monitore, Fernsehgeräte, Navigationsgeräte, öffentliche Displays und Terminals und/oder industrielle Displays.

### Bezugszeichenliste

- 1: kratzfestes, chemisch vorgespanntes Glaselement
- 10: chemisch vorgespanntes Glassubstrat
- 11: kaliumreiche Oberfläche des chemisch vorgespannten Glassubstrats
- 20: sauerstoffreiche Schicht, Haftvermittlerschicht
- 30: (untere) nitridische Hartstoffschicht mit höherem Brechungsindex
- 40: (untere) Schicht mit niedrigerem Brechungsindex, vorzugsweise aus Siliziumoxid mit einem Anteil von Aluminium
- 50: (obere) nitridische Hartstoffschicht mit höherem Brechungsindex
- 60: (obere) Schicht mit niedrigerem Brechungsindex, vorzugsweise aus Siliziumoxid mit einem Anteil von Aluminium
- 70: fluororganische Schicht
- 100: Antireflexionsbeschichtung
- 200: Schichtsystem
- X: durchgehende Kurve X bezeichnet die spektrale Reflektivität eines unbeschichteten, chemisch vorgespannten Glases
- Y: strichpunktartige Kurve Y stellt die Reflektivität, bzw. Reflexionsgrad eines chemisch vorgespannten Glases, welches mit dem Schichtsystem bzw. der Antireflexionsbeschichtung nach System A (nach Fig. 3) beschichtet ist, dar
- Z: gestrichelt dargestellte Kurve Z zeigt die Reflektivität eines chemisch vorgespannten Glassubstrats mit dem Schichtsystem bzw. mit der Antireflexionsbeschichtung nach System C) (nach Fig. 3)
- YZ: gepunktete Kurve YZ stellt die spektrale Reflektivität beziehungsweise den Reflexionsgrad eines chemisch vorgespannten Glases, welches mit dem Schichtsystem beziehungsweise der Antireflexionsbeschichtung nach System B (nach Fig. 3) beschichtet ist, dar

## Patentansprüche

1. Kratzfestes, chemisch vorgespanntes Glaselement (1), umfassend ein chemisch vorgespanntes Glassubstrat (10) mit kaliumreicher Oberfläche (11) und ein Schichtsystem (200)-aus mehreren aufeinanderfolgenden Schichten, welches
angrenzend an die kaliumreiche Oberfläche (11) des Glases (10) eine sauerstoffreiche Schicht (20) aufweist, umfassend vorwiegend Siliziumoxid und/oder Aluminiumoxid, wobei die sauerstoffreiche Schicht (20) eine Haftvermittlerschicht (20) zu einer nitridischen Hartstoffschicht (30) ist, die unterster Teil einer mehrlagigen, insbesondere vierlagigen, Antireflexionsbeschichtung (100) ist, welche aus Schichten mit verschiedenen, abwechselnd höheren Brechungsindizes (30, 50) und niedrigeren Brechungsindizes (40, 60) aufgebaut ist, wobei die Schichten mit höheren Brechungsindizes (30, 50) eine untere nitridische Hartstoffschicht (30) und eine obere nitridische Hartstoffschicht (50) sind.

2. Kratzfestes, chemisch vorgespanntes Glaselement (1) gemäß dem vorstehenden Anspruch, wobei die Schichten mit niedrigeren Brechungsindizes (40, 60) aus Siliziumoxid mit einem Anteil von Aluminium aufgebaut sind.

3. Kratzfestes, chemisch vorgespanntes Glaselement (1) gemäß einem der vorstehenden Ansprüche, wobei die sauerstoffreiche Schicht (20) eine Schichtdicke von 1 nm bis 100 nm aufweist, bevorzugt von 1 nm bis 50 nm und besonders bevorzugt von 1 nm bis 20 nm, und bevorzugt einen ähnlichen Brechungsindex aufweist wie das chemisch vorgespannte Glassubstrat (10, 11), bevorzugt ähnlich im sichtbaren Spektralbereich, insbesondere mit einer Abweichung von weniger als 10%.

4. Kratzfestes, chemisch vorgespanntes Glaselement (1) gemäß einem der vorstehenden Ansprüche, wobei die obere nitridische Hartstoffschicht (50) die größte Schichtdicke der Antireflexionsbeschichtung (100) und des gesamten Schichtsystems (200) aufweist mit einer dünneren Schichtdicke im Bereich von 100 nm bis 200 nm, bevorzugt von 130 nm bis 170 nm, die farblich neutral reflektierend ist, oder alternativ mit einer dickeren Schichtdicke im Bereich von 200 nm bis 1000 nm, bevorzugt im Bereich von 300 nm bis 600 nm, ganz besonders bevorzugt von 400 nm bis 500 nm, die besonders kratzbeständig ist.

5. Kratzfestes, chemisch vorgespanntes Glaselement (1) gemäß einem der vorstehenden Ansprüche 1 bis 3, wobei die obere nitridische Hartstoffschicht (50) die größte Schichtdicke der Antireflexionsbeschichtung (100) und des gesamten Schichtsystems (200) aufweist mit einer dünneren Schichtdicke im Bereich von 100 nm bis 200 nm, bevorzugt von 130 nm bis 170 nm, oder alternativ mit einer mittleren Schichtdicke der oberen nitridischen Hartstoffschicht (50) von 200 nm bis 300 nm, bevorzugt von 230 nm bis 290 nm, wobei die Antireflexionsbeschichtung (100) kratzbeständig ist, oder alternativ mit einer dickeren Schichtdicke der oberen nitridischen Hartstoffschicht (50) im Bereich von 300 nm bis 1000 nm, bevorzugt im Bereich von 350 nm bis 600 nm, ganz besonders bevorzugt von 400 nm bis 500 nm, wobei die Antireflexionsbeschichtung (100) besonders kratzbeständig ist.

6. Kratzfestes, chemisch vorgespanntes Glaselement (1) gemäß einem der vorstehenden Ansprüche, wobei die obere nitridische Hartstoffschicht (50) einen Anteil an der gesamten Schichtdicke des Schichtsystems von mindestens 0,4 aufweist, bevorzugt von mindestens 0,6, besonders bevorzugt von mindestens 0,7.

7. Kratzfestes, chemisch vorgespanntes Glaselement (1) gemäß einem der vorstehenden Ansprüche, wobei das Schichtsystem (200) angrenzend an die oberste Schicht (60) der Antireflexionsbeschichtung (100) eine fluororganische Schicht (70), vorzugsweise in Form einer Monolage aufweist, bevorzugt mit einer Schichtdicke von 1 nm bis 20 nm, besonders bevorzugt mit einer Schichtdicke von 1 nm bis 10 nm.

8. Kratzfestes, chemisch vorgespanntes Glaselement (1) gemäß einem der vorstehenden Ansprüche, wobei die nitridischen Hartstoffschichten (30, 50) mit höheren Brechungsindizes aus Siliziumnitrid mit einem Anteil von Aluminium aufgebaut sind, bei welchen das Verhältnis der Stoffmengen von Aluminium zu Silizium bevorzugt größer als 0,05, vorzugsweise größer als 0,08, beträgt.

9. Kratzfestes, chemisch vorgespanntes Glaselement (1) gemäß einem der vorstehenden Ansprüche, wobei das Glassubtrat (10) durch Austausch von Natrium- gegen Kalium-Ionen an dessen Oberfläche (11) chemisch vorgespannt ist, wobei die Druckspannung in der Oberfläche (11) des Glassubstrats (10) mindestens 700 MPa und die Austauschtiefe der Alkaliionen mindestens 25 µm beträgt, vorzugsweise, wobei die Druckspannung in der Oberfläche (11) des Glases (10) mindestens 750 MPa und die Austauschtiefe der Alkaliionen mindestens 30 µm beträgt, besonders bevorzugt, wobei die Druckspannung in der Oberfläche (11) des Glassubstrats (10) mehr als 800 MPa und die Austauschtiefe der Alkaliionen mindestens 35 µm beträgt.

10. Kratzfestes, chemisch vorgespanntes Glaselement (1) gemäß einem der vorstehenden Ansprüche, wobei die Zusammensetzung des chemisch vorgespannten Glases im Inneren des Glassubstrats (10) folgende Komponenten in Molprozent aufweist:
| | |
|---|---|
| SiO₂ | 56 - 70 |
| Al₂O₃ | 10,5 - 16 |
| B₂O₃ | 0 - 3 |
| P₂O₅ | 0 - 3 |
| Na₂O | 10 - 15 |
| K₂O | 0 - 2 |
| MgO | 0 - 5 |
| ZnO | 0 - 3 |
| TiO₂ | 0 - 2,1 |
| SnO₂ | 0 - 1 |
| F | 0 - 5, |
| und 0-2, vorzugsweise 0 - 1, weitere Komponenten. | |

11. Kratzfestes, chemisch vorgespanntes Glaselement (1) gemäß einem der vorstehenden Ansprüche, wobei das Glassubstrat (10, 11) eine Dicke von 0,25 mm bis 2,0 mm aufweist.

12. Verwendung eines kratzfesten, chemisch vorgespannten Glaselements (1) gemäß einem der vorstehenden Ansprüche
als Deckglas für optische Anzeigen elektronischer Geräte, insbesondere mit oder ohne Touch-Funktion, insbesondere Mobiltelefone, Smartphones, Tablet-PCs oder PCs mit Touch-Display, Monitore, Fernsehgeräte, Navigationsgeräte, öffentliche Displays und Terminals und/oder industrielle Displays.

13. Verfahren zur Herstellung eines kratzfesten, chemisch vorgespannten Glaselements (1) gemäß einem der Ansprüche 1 bis 11, bei welchem die Schichten (20, 30, 40, 50, 60 und optional 70) des Schichtsystems (200) durch Sputtern, insbesondere reaktives Sputtern, abgeschieden werden.

## Claims

1. A scratch-resistant chemically tempered glass element (1), comprising a chemically tempered glass substrate (10) having a potassium-rich surface (11), and a layer system (200) comprising a plurality of successive layers including an oxygen-rich layer (20) adjacent to the potassium-rich surface (11) of the glass (10), which comprises predominantly silicon oxide and/or aluminium oxide, wherein said oxygen-rich layer (20) is an adhesion promoting layer (20) for a nitridic hard material layer (30) which is the lowermost component of a multi-layered, in particular four-layered anti-reflective coating (100) that is composed of layers having different refractive indices, alternating higher refractive indices (30, 50) and lower refractive indices (40, 60); wherein the layers having a higher refractive index (30, 50) comprise a lower nitridic hard material layer (30) and an upper nitridic hard material layer (50).

2. The scratch-resistant chemically tempered glass element (1) according to the preceding claim, wherein the layers having a lower refractive index (40, 60) are made of silicon oxide with a proportion of aluminium.

3. The scratch-resistant chemically tempered glass element (1) according to any one of the preceding claims, wherein the oxygen-rich layer (20) has a layer thickness from 1 nm to 100 nm, preferably from 1 nm to 50 nm, and more preferably from 1 nm to 20 nm, and preferably has a similar refractive index as the chemically tempered glass substrate (10, 11), preferably similar in the visible spectral range, in particular with a deviation of less than 10 %.

4. The scratch-resistant chemically tempered glass element (1) according to any one of the preceding claims, wherein the upper nitridic hard material layer (50) has the largest layer thickness of the anti-reflective coating (100) and of the entire layer system (200), with a thinner layer thickness in a range from 100 nm to 200 nm, preferably from 130 nm to 170 nm, which exhibits neutral colour reflectivity, or alternatively with a thicker layer thickness in a range from 200 nm to 1000 nm, preferably in a range from 300 nm to 600 nm, most preferably from 400 nm to 500 nm, which is particularly scratch-resistant.

5. The scratch-resistant chemically tempered glass element (1) according to any one of the preceding claims 1 to 3, wherein the upper nitridic hard material layer (50) has the largest layer thickness of the anti-reflective coating (100) and of the entire layer system (200), with a thinner layer thickness in a range from 100 nm to 200 nm, preferably from 130 nm to 170 nm, or alternatively with a medium layer thickness of the upper nitridic hard material layer (50) from 200 nm to 300 nm, preferably from 230 nm to 290 nm, in which case the anti-reflective coating (100) is scratch-resistant, or alternatively with a thicker layer thickness of the upper nitridic hard material layer (50) in a range from 300 nm to 1000 nm, preferably in a range from 350 nm to 600 nm, most preferably from 400 nm to 500 nm, in which case the anti-reflective coating (100) is particularly scratch-resistant.

6. The scratch-resistant chemically tempered glass element (1) according to any one of the preceding claims, wherein the upper nitridic hard material layer (50) accounts for a fraction of the total layer thickness of the layer system of at least 0.4, preferably at least 0.6, more preferably at least 0.7.

7. The scratch-resistant chemically tempered glass element (1) according to any one of the preceding claims, wherein the layer system (200) comprises an organofluorine layer (70) adjacent to the uppermost layer (60) of the anti-reflective coating (100), preferably in the form of a monolayer, preferably with a layer thickness from 1 nm to 20 nm, more preferably with a layer thickness from 1 nm to 10 nm.

8. The scratch-resistant chemically tempered glass element (1) according to any one of the preceding claims, wherein the nitridic hard material layers (30, 50) having a higher refractive index are made of silicon nitride including a proportion of aluminium, with a ratio of the molar amounts of aluminium to silicon of preferably greater than 0.05, more preferably greater than 0.08.

9. The scratch-resistant chemically tempered glass element (1) according to any one of the preceding claims, wherein the glass substrate (10) has been chemically tempered by exchanging sodium ions for potassium ions in the surface (11) thereof, wherein the compressive stress in the surface (11) of the glass substrate (10) is at least 700 MPa and the exchange depth of the alkali ions is at least 25 µm, wherein preferably the compressive stress in the surface (11) of the glass (10) is at least 750 MPa and the exchange depth of the alkali ions is at least 30 µm, wherein most preferably the compressive stress in the surface (11) of the glass substrate (10) is more than 800 MPa and the exchange depth of the alkali ions is at least 35 µm.

10. The scratch-resistant chemically tempered glass element (1) according to any one of the preceding claims, wherein the composition of the chemically tempered glass inside the glass substrate (10) comprises the following components, in mole percent:
| | |
|---|---|
| SiO₂ | 56 - 70 |
| Al₂O₃ | 10.5 - 16 |
| B₂O₃ | 0 - 3 |
| P₂O₅ | 0 - 3 |
| Na₂O | 10 - 15 |
| K₂O | 0 - 2 |
| MgO | 0 - 5 |
| ZnO | 0 - 3 |
| TiO₂ | 0 - 2.1 |
| SnO₂ | 0 - 1 |
| F | 0 - 5, |
| and | 0 - 2, preferably 0 - 1 of other components. |

11. The scratch-resistant chemically tempered glass element (1) according to any one of the preceding claims, wherein the glass substrate (10, 11) has a thickness from 0.25 mm to 2.0 mm.

12. Use of a scratch-resistant chemically tempered glass element (1) according to any one of the preceding claims as a cover glass for optical displays of electronic devices, in particular with and without touch functionality, in particular mobile phones, smart phones, tablet PCs, and PCs with touch display, monitors, television sets, navigation devices, public displays and terminals, and/or industrial displays.

13. A method for producing a scratch-resistant chemically tempered glass element (1) according to any one of claims 1 to 11, wherein the layers (20, 30, 40, 50, 60, and optionally 70) of the layer system (200) are deposited by sputter deposition, in particular reactive sputter deposition.

## Revendications

1. Élément de verre (1) anti-rayures trempé chimiquement, comprenant un substrat de verre (10) trempé chimiquement avec une surface riche en potassium (11) et un système de couches (200) composé de plusieurs couches se suivant les unes les autres, lequel présente, de manière adjacente à la surface riche en potassium (11) du verre (10), une couche riche en oxygène (20), comprenant majoritairement de l'oxyde de silicium et/ou de l'oxyde d'aluminium, dans lequel la couche riche en oxygène (20) est une couche de promoteur d'adhérence (20) pour donner une couche de matière dure nitridique (30), qui constitue une partie la plus basse d'un revêtement anti-réfléchissant (100) à couches multiples, en particulier à quatre couches, lequel est élaboré à partir de couches avec différents indices de réfraction plus élevés (30, 50) et indices de réfraction plus bas (40, 60) en alternance, dans lequel les couches avec des indices de réfraction plus élevés (30, 50) sont une couche de matière dure nitridique inférieure (30) et une couche de matière dure nitridique supérieure (50).

2. Élément de verre (1) anti-rayures trempé chimiquement selon la revendication précédente, dans lequel les couches avec des indices de réfraction plus bas (40, 60) sont élaborées à partir d'oxyde de silicium avec une fraction d'aluminium.

3. Élément de verre (1) anti-rayures trempé chimiquement selon l'une quelconque des revendications précédentes, dans lequel la couche riche en oxygène (20) présente une épaisseur de couche de 1 nm à 100 nm, de manière préférée de 1 nm à 50 nm et de manière particulièrement préférée de 1 nm à 20 nm et présente de manière préférée un indice de réfraction similaire à celui du substrat de verre (10, 11) trempé chimiquement, de manière préférée similaire dans le domaine spectral visible, en particulier avec un écart inférieur à 10 %.

4. Élément de verre (1) anti-rayures trempé chimiquement selon l'une quelconque des revendications précédentes, dans lequel la couche en matière dure nitridique supérieure (50) présente l'épaisseur de couche la plus importante du revêtement anti-réfléchissant (100) et de l'ensemble du système de couches (200) avec une épaisseur de couche plus fine dans la plage de 100 nm à 200 nm, de manière préférée de 130 nm à 170 nm, qui est réfléchissante de manière colorée et neutre, ou en variante avec une épaisseur de couche plus épaisse dans la plage de 200 nm à 1 000 nm, de manière préférée dans la plage de 300 nm à 600 nm, de manière très particulièrement préférée de 400 nm à 500 nm, qui est en particulier résistant aux rayures.

5. Élément de verre (1) anti-rayures trempé chimiquement selon l'une quelconque des revendications 1 à 3, dans lequel la couche de matière dure nitridique supérieure (50) présente l'épaisseur de couche la plus grande du revêtement anti-réfléchissant (100) et de l'ensemble du système de couches (200), avec une épaisseur de couche plus fine dans la plage de 100 nm à 200 nm, de manière préférée de 130 nm à 170 nm, ou en variante avec une épaisseur de couche moyenne de la couche de matière dure nitridique supérieure (50) de 200 nm à 300 nm, de manière préférée de 230 nm à 290 nm, dans lequel le revêtement anti-réfléchissant (100) est résistant aux rayures, ou en variante avec une épaisseur de couche plus épaisse de la couche de matière dure nitridique supérieure (50) dans la plage de 300 nm à 1 000 nm, de manière préférée dans la plage de 350 nm à 600 nm, de manière très particulièrement préférée de 400 nm à 500 nm, dans lequel le revêtement anti-réfléchissant (100) est particulièrement résistant aux rayures.

6. Élément de verre (1) anti-rayures trempé chimiquement selon l'une quelconque des revendications précédentes, dans lequel la couche de matière dure nitridique supérieure (50) présente une fraction de l'ensemble de l'épaisseur de couche du système de couches d'au moins 0,4, de manière préférée d'au moins 0,6, de manière particulièrement préférée d'au moins 0,7.

7. Élément de verre (1) anti-rayures trempé chimiquement selon l'une quelconque des revendications précédentes, dans lequel le système de couches (200) présente, de manière adjacente à la couche la plus haute (60) du revêtement anti-réfléchissant (100), une couche fluoro-organique (70), de préférence sous la forme d'une monocouche, de manière préférée avec une épaisseur de couche de 1 nm à 20 nm, de manière particulièrement préférée avec une épaisseur de couche de 1 nm à 10 nm.

8. Élément de verre (1) anti-rayures trempé chimiquement selon l'une quelconque des revendications précédentes, dans lequel les couches de matière dure nitridiques (30, 50) avec des indices de réfraction plus élevés sont élaborées à partir de nitrure de silicium avec une fraction d'aluminium, pour lesquelles le rapport des quantités de matière entre l'aluminium et le silicium est de manière préférée supérieur à 0,05, de préférence supérieur à 0,08.

9. Élément de verre (1) anti-rayures trempé chimiquement selon l'une quelconque des revendications précédentes, dans lequel le substrat de verre (10) est trempé chimiquement en remplaçant des ions de sodium contre des ions de potassium au niveau de sa surface (11), dans lequel la contrainte de pression dans la surface (11) du substrat de verre (10) est d'au moins 700 MPa et la profondeur de remplacement des ions alcalins est d'au moins 25 µm, de préférence dans lequel la contrainte de pression dans la surface (11) du verre (10) est d'au moins 750 MPa et la profondeur de remplacement des ions alcalins est d'au moins 30 µm, de manière particulièrement préférée dans lequel la contrainte de pression dans la surface (11) du substrat de verre (10) est supérieure à 800 MPa et la profondeur de remplacement des ions alcalins est d'au moins 35 µm.

10. Élément de verre (1) anti-rayures trempé chimiquement selon l'une quelconque des revendications précédentes, dans lequel la composition du verre trempé chimiquement présente à l'intérieur du substrat de verre (10) des composants suivants en pourcentages molaires :
| | |
|---|---|
| SiO₂ | 56 - 70 |
| Al₂O₃ | 10,5 - 16 |
| B₂O₃ | 0 - 3 |
| P₂O₅ | 0 - 3 |
| Na₂O | 10 - 15 |
| K₂O | 0 - 2 |
| MgO | 0 - 5 |
| ZnO | 0 - 3 |
| TiO₂ | 0 - 2,1 |
| SnO₂ | 0 - 1 |
| F | 0 - 5, |
| et 0 - 2, de préférence 0 - 1, d'autres composants. | |

11. Élément de verre (1) anti-rayures trempé chimiquement selon l'une quelconque des revendications précédentes, dans lequel le substrat en verre (10, 11) présente une épaisseur de 0,25 mm à 2,0 mm.

12. Utilisation d'un élément de verre (1) anti-rayures trempé chimiquement selon l'une quelconque des revendications précédentes,
en tant que verre de recouvrement pour des affichages optiques d'appareils électroniques, en particulier avec ou sans fonction tactile, en particulier des téléphones portables, des téléphones intelligents, des tablettes ou des PC avec écran tactile, des moniteurs, des appareils de télévision, des appareils de navigation, des écrans et des terminaux publics et/ou des écrans industriels.

13. Procédé de fabrication d'un élément de verre (1) anti-rayures trempé chimiquement selon l'une quelconque des revendications 1 à 11, où les couches (20, 30, 40, 50, 60 et en option 70) du système de couches (200) sont séparées par pulvérisation, en particulier par pulvérisation réactive.
